# EUROPÄISCHE PATENTSCHRIFT

(11) **EP 1 428 998 B1**
(45) Veröffentlichungstag und Bekanntmachung des Hinweises auf die Patenterteilung: **07.07.2010**
(21) Anmeldenummer: 03025766.1
(22) Anmeldetag: 11.11.2003
(51) Int. Cl.: F02B 27/02

(54) **Schaltklappenanordnung**
Control valve assembly
Ensemble de volets de commande

(30) Priorität: 15.11.2002 DE 10253287
(43) Veröffentlichungstag der Anmeldung: 16.06.2004
(73) Patentinhaber: Pierburg GmbH, 41460 Neuss (DE)
(72) Erfinder: Ludwig, Norbert, 41379 Brüggen (DE); Bürger, Frank, 52355 Düren (DE)
(74) Vertreter: Patentanwälte ter Smitten

(56) Entgegenhaltungen:
- DE-A1- 4 401 585
- DE-A1- 19 614 474
- US-A- 4 646 689

## Beschreibung

Die Erfindung betrifft eine Schaltklappenanordnung für Luftansaugkanäle. Insbesondere ist die Schaltklappenanordnung für Luftansaugkanäle von Brennkraftmaschine, insbesondere V-Motoren zur Längenveränderung der Luftansaugkanäle, geeignet.

Ein aus DE 196 14 474 bekanntes Luftansaugkanalsystem weist für jeden Zylinder einen spiralförmig verlaufenden Luftansaugkanal auf. Hierbei erfolgt das Ansaugen der Luft über einen zentralen, innerhalb der spiralförmigen Ansaugkanäle angeordneten Sammel-Einlasskanal. Durch den für sämtliche Luftansaugkanäle gemeinsam vorgesehenen Sammel-Einlasskanal wird Luft angesaugt und über die einzelnen Luftansaugkanäle zur Brennkraftmaschine geleitet. Zum Verändern der Länge des Luftansaugkanals ist ein Kurzschlusskanal vorgesehen. Dieser mit einer Schaltklappe öffen- und verschließbare Kurzschlusskanal ist mit dem Sammel-Einlasskanal und jeweils einem Luftansaugkanal verbunden.

Die einzelnen Schaltklappen sind über eine gemeinsame Welle miteinander verbunden. Die Lagerung der Welle erfolgt in dem Gehäuse des Luftansaugkanalsystems. Insbesondere bei Luftansaugkanalanordnungen für V-Motoren sind zwei Reihen an Schaltklappen einander gegenüberliegend angeordnet. Jede Reihe der Schaltklappen ist mit einer gemeinsamen Schaltwellen verbunden, so dass beispielsweise bei einem V12- Motor jeweils sechs Schaltklappen von einer gemeinsamen Schwenk- bzw. Schaltwelle getragen werden. Die Schaltwellen sind mit einer Betätigungseinrichtung zum Schalten der Schaltklappen verbunden. Auf Grund von Schwingungen und Resonanzen kann es vorkommen, dass sich die Stellung der Schaltklappen verändert. Hierdurch treten beispielsweise störende Luftverwirbelungen auf, die negative Einflüsse auf die Motorleistung haben können. Insbesondere in der Offenstellung der Schaltklappen, d.h. wenn die Schaltklappen insbesondere vollständig geöffnet sind, kann auf Grund von Resonanzen und Erschütterungen ein Rückstellen der Schaltklappen auftreten.

DE 44 01 585 beschreibt eine Drosselklappeneinrichtung für eine Brennkraftmaschine, wobei die Drosselklappe wenigstens teilweise permanentmagnetisch ausgestaltet ist. An einem Gehäuse ist wenigstens eine elektrisch ansteuerbare Spule angeordnet, die mit dem permanentmagnetischen Material der Drosselklappe zusammenwirkt.

Aufgabe der Erfindung ist es, eine Schaltklappenanordnung für Luftansaugkanäle zu schaffen, bei der ein Verstellen der Schaltklappenstellung durch Schwingungen oder Resonanzen vermieden wird.

Die Lösung der Aufgabe erfolgt erfindungsgemäß durch die Merkmale des Anspruchs 1.

Die erfindungsgemäße Schaltklappenanordnung weist mindestens eine Schaltklappe auf, die zur Lagerung mit einer Schaltwelle verbunden ist. Die Schaltwelle ist mit einer Betätigungseinrichtung, wie einem Elektromotor oder einem Schrittmotor, zum Schalten der Schaltklappe verbunden. Um ein Verändern der Offenstellung durch Schwingungen oder Resonanzen zu vermeiden, weist die Schaltklappenanordnung erfindungsgemäß eine Arretierungseinrichtung zum Halten der Schaltklappe in einer Endstellung auf. Bei der Endstellung der Schaltklappe handelt es sich entweder um eine Offenstellung oder eine Geschlossenstellung, d.h. um Stellungen, in denen die Schaltklappe den Luftansaugkanal beispielsweise vollständig öffnet oder schließt. Es kann sich bei einer Endstellung auch um eine Stellung handeln, in der die Schaltklappe den Luftansaugkanal um einen definierten Querschnitt, beispielsweise 80% des Querschnitts, freigibt.

Bei der Arretierungseinrichtung kann es sich beispielsweise um eine Rasteinrichtung handeln, so dass die Schaltklappe oder die Schaltwelle in einer Endstellung einrastet. Durch das Vorsehen von Rastelementen ist eine größere Kraft nötig, um die Schaltklappe wieder aus der Endstellung zurückzubewegen oder in eine andere Endstellung überzuführen. Beispielsweise handelt es sich hierbei um das Überführen von der Offenstellung in die Geschlossenstellung. Das Vorsehen von vorzugsweise elastisch ausgebildeten Rastelementen hat jedoch den Nachteil, dass die Rastelemente mechanisch belastet werden und Verschleißerscheinungen unterliegen.

Ferner ist es möglich, beispielsweise über einen geknickten Hebel oder dgl., die Schaltwelle derart anzusteuern, dass vor Erreichen einer Endstellung ein Totpunkt bzw. ein Extrempunkt überwunden werden muss. Dies hat zur Folge, dass zum Verstellen der Schaltklappe ebenfalls der Totpunkt überwunden werden muss. Da hierzu eine erhöhte Kraft erforderlich ist, ist ein Verstellen der Klappe auf Grund von Schwingungen oder Resonanz vermieden. Auch hierbei treten mechanische Belastungen auf, die bei häufigen Schaltvorgängen zu Materialermüdungen oder Verschleiß führen können.

Bei einer besonders bevorzugten Ausführungsform ist die Arretierungseinrichtung daher derart ausgebildet, dass die Arretierung durch Magnetkräfte erfolgt. Hierbei ist insbesondere ein erstes und ein zweites Arretierungselement vorgesehen, die zusammen wirken. Bei den Arretierungselementen kann es sich beispielsweise um zwei Magnete handeln, die in einer vorbestimmten Endstellung auf Grund der Magnetkräfte eine Arretierung der Schaltklappe bewirken. Ebenso kann es sich beispielsweise um einen Magnet- und ein Metallteil handeln, die entsprechend zusammen wirken. Durch das erfindungsgemäße Vorsehen einer auf Magnetkräften basierenden Arretierungseinrichtung ist es möglich, zwischen den Arretierungselementen auch in der Endstellung, in der die Schaltklappe arretiert wird, einen Spalt vorzusehen. Das Auftreten von Verschleiß ist somit vermieden.

Vorzugsweise ist eines der Arretierungselemente an der Schaltklappe und/oder der Schaltwelle und das andere Arretierungselement am Saugrohrgehäuse bzw. an einer Saugrohrwandung vorgesehen. Da es sich bei den Schaltklappen, der Schaltwelle und dem Saugrohrgehäuse üblicherweise um Kunststoffteile handelt, können die Arretierungselemente in die entsprechenden Bauteile eingegossen sein.

Bei einer weiteren besonders bevorzugten Ausführungsform, die insbesondere für V-Motoren geeignet ist, sind jeweils mehrere Schaltklappen an einer ersten und einer zweiten Schaltwelle angeordnet. Hierbei ist insbesondere eine der beiden Schaltwellen mit einer Betätigungseinrichtung verbunden. Um keine zweite Betätigungseinrichtung vorsehen zu müssen, sind die beiden Schaltwellen vorzugsweise über ein Koppelgestänge miteinander verbunden. Ein Betätigen der Betätigungseinrichtung, beispielsweise eines Elektromotors, führt somit zum Schalten bzw. Drehen einer der beiden Schaltwellen, wobei die zweite Schaltwelle über das Koppelgestänge mitgedreht wird.

Besonders bevorzugt ist es, bei dieser Ausführungsform eines der beiden Arretierungselemente an der Koppelstange vorzusehen. Hierzu kann ein Magnet oder ein Metallteil an einer geeigneten Stelle der Koppelstange vorgesehen sein, so dass dieses Arretierungselement in der Endstellung in der Nähe eines zweiten, insbesondere in dem Saugrohrgehäuse vorgesehenen Arretierungselement angeordnet ist, so dass eine Arretierung des Koppelgestänges und somit der beiden Schaltwellen auf Grund von Magnetkräften erfolgt. Bei dieser Ausführungsform ist vorzugsweise ein Arretierungselement an dem Koppelgestänge und ein Arretierungselement am Saugrohrgehäuse vorgesehen. Das Vorsehen von Arretierungselementen an der bzw. den Schaltklappen und/ oder der bzw. den Schaltwellen ist nicht erforderlich.

Bei einer weiteren bevorzugten Ausführungsform ist das erste Arretierungselement derart angeordnet, dass das zweite Arretierungselement in dem Betätigungsweg, den das erste Arretierungselement beim Betätigen der Schaltklappe zurücklegt, angeordnet ist. Das zweite Arretierungselement ist hierbei vorzugsweise derart ausgebildet, dass es das erste Arretierungselement zum Erreichen der Endstellung, in der die Arretierung erfolgen soll, auslenkt. Das zweite Arretierungselement ist somit in dem Betätigungsweg des ersten Arretierungselement angeordnet. Beispielsweise kann das zweite Arretierungselement eine Rampe oder Schräge aufweisen, über die das erste Arretierungselement gleitet und somit ausgelenkt wird. Zum Erreichen der Endstellung kann das erste Arretierungselement sich sodann, zumindest teilweise, von der Auslenkung zurück bewegen und beispielsweise in einer Vertiefung einrasten. Hierzu kann das zweite Arretierungselement eine weitere Rampe aufweisen, die der ersten Rampe oder Schräge gegenüber liegt und entlang der das erste Arretierungselement wieder zurück gleitet.

Besonders bevorzugt ist es hierbei, dass die beiden Arretierungselemente als Magnete ausgebildet sind und derart angeordnet sind, dass sie sich gegenseitig abstoßen. Das erste Arretierungselement wird hierbei beim Betätigen der Schaltklappe entlang des Betätigungsweges bewegt und wird bereits, bevor es das zweite Arretierungselement berührt, auf Grund der magnetischen Abstoßungskräfte ausgelenkt. Hierbei sind die beiden als Arretierungselemente ausgebildeten Magnete vorzugsweise abgeschrägt und/oder abgerundet, um bei einem ggf. dennoch auftretenden Berühren der Magnete ein Verhaken oder Beschädigen zu vermeiden. Durch das Vorsehen von sich abstoßenden Magneten als Arretierungselemente ist ein absolut berührungsloses Halten der Schaltklappe in einer Endstellung möglich. Es tritt somit kein Verschleiss auf, der beispielsweise zu Ungenauigkeiten der Lage der Schaltklappe in der entsprechenden Stellung führen kann.

Das insbesondere als Magnet ausgebildete erste Arretierungselement ist vorzugsweise an einem Halteelement, das insbesondere stangenförmig ausgebildet ist, angeordnet. Das Halteelement ist derart mit einem Teil der Schaltklappenanordnung verbunden, dass es beim Betätigen der Schaltklappe mitbewegt wird und einen Betätigungsweg zurücklegt.

Bei einer Schaltklappenanordnung mit zwei Schaltwelle, die über ein Koppelgestänge miteinander verbunden sind, ist es besonders bevorzugt, das Halteelement mit dem Koppelgestänge zu verbinden. Das zweite Arretierungselement ist vorzugsweise jeweils ortsfest, insbesondere mit dem Saugrohrgehäuse, verbunden. Das Halteelement ist vorzugsweise elastisch auslenkbar. Hierbei kann das Halteelement, das insbesondere stangenförmig ausgebildet ist, aus einem elastischen Werkstoff, insbesondere Kunststoff, hergestellt sein. Ggf. ist in dem Halteelement eine Verjüngung vorgesehen, um ein elastisches Auslenken zu ermöglichen. Ebenso ist es möglich, ein elastisches Gelenk vorzusehen.

Nachfolgend wird die Erfindung anhand einer bevorzugten Ausführungsform unter Bezugnahme auf die anliegenden Zeichnungen näher erläutert.

Es zeigen:
- Fig. 1: eine schematische Schnittansicht eines Luftansaugkanalsystems mit einer bevorzugten Ausführungsform der Arretierungseinrichtung,
- Fig. 2: eine schematische Seitenansicht der erfindungsgemäßen Schaltklappenanordnung in vereinfachter Darstellung,
- Fig. 3: eine schematische Draufsicht der erfindungsgemäßen Schaltklappenanordnung,
- Fig. 4: eine schematische Seitenansicht einer weiteren Ausführungsform der erfindungsgemäßen Schaltklappenanordnung in geschlossener Stellung,
- Fig. 5: die in Fig. 4 dargestellte Ausführungsform der Schaltklappenanordnung in einer geschlossenen Endstellung und
- Fig. 6: die in den Fign. 4 und 5 dargestellte Schaltklappenanordnung in offener Endstellung.

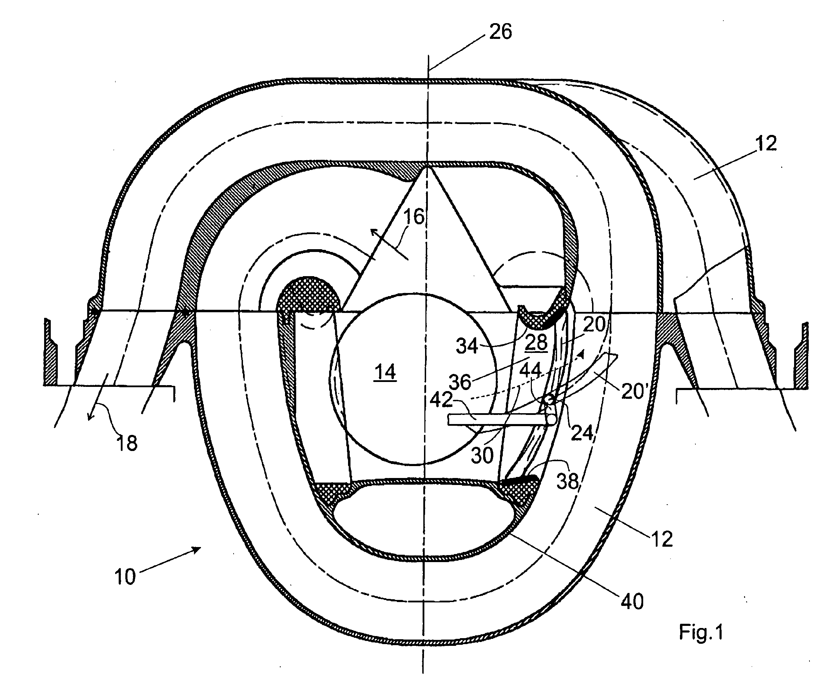

Ein Luftansaugkanalsystem 10 weist mehrere spiralförmige Luftansaugkanäle 12 auf. Die Luftansaugkanäle 12 sind jeweils mit einem Zylinder einer Brennkraftmaschine verbunden. Bei dem in Fig. 1 dargestellten Luftansaugkanalsystem 10 handelt es sich um ein Luftansaugkanalsystem für einen V-Motor. Die Luft wird über einen gemeinsamen Sammel-Einlasskanal 14 angesaugt und in einem ersten Ansaugzustand mit langem Ansaugkanal in Richtung eines Pfeils 16 in den Ansaugkanal 12 eingesaugt und in Richtung eines Pfeils 18 zum Verbrennungsmotor geleitet.

Um den Luftansaugkanal zu verkürzen, ist je Luftansaugkanal 12 eine Schaltklappe 20 vorgesehen. Die in Fig. 1 rechten, hintereinander angeordneten Ansaugkanäle weisen jeweils eine Klappe auf, die von einer gemeinsamen Welle 24 getragen sind.

Das Luftansaugkanalsystem 10 ist im Wesentlichen zu einer Achse 26 symmetrisch aufgebaut, wobei je Seite eines z.B. 6-Zylinder V-Motors drei Ansaugkanäle 12 in Fig. 1 nach links und drei Ansaugkanäle 12 in Fig. 1 nach rechts führen. Für die nach rechts führenden Ansaugkanäle, deren Klappen in Fig. 1 nicht sichtbar sind, ist ebenfalls eine gemeinsame zweite Schaltwelle 22 vorgesehen.

Zum Öffnen eines Kurzschlusskanals 28 kann die Schaltklappe 20 mit Hilfe der Schaltwelle 24 in eine mit 20' bezeichnete Stellung geschwenkt werden. Zumindest ein Teil der durch den Sammel-Einlasskanal 14 angesaugten Luft strömt sodann in Richtung eines Pfeils 30 in den Luftansaugkanal 12.

Bei einem 6-Zylinder V-Motor sind zwei Schaltwellen 22, 24 vorgesehen, die jeweils drei Schaltklappen 20 tragen. Die Schaltklappen 20 sind vorzugsweise zusammen mit der Welle 22 bzw. 24 aus einem Stück hergestellt. Vorzugsweise handelt es sich hierbei um ein Kunststoffteil, das beispielsweise im Spritzgussverfahren hergestellt wurde. Die Schalt- bzw. Schwenkwellen 22, 24 sind in dem Saugrohrgehäuse 40 schwenkbar gelagert. Jede Schaltklappe 20 ist mit einer Dichtung versehen, durch die in geschlossenem Zustand ein dichtes Verschließen des Kurzschlusskanals 28 erfolgt. Die Dichtungen sind vorzugsweise aus elastomerem Kunststoff hergestellt und an die Schwenkklappen 20 angespritzt.

Zusätzlich oder anstatt der Dichtung können auch an den Innenwänden 34, 36, 38 (Fig. 1) Dichtungen vorzugsweise aus elastomerem Material vorgesehen sein. An der der Innenwand 36 gegenüberliegenden Innenwand, die in Fig. 1 nicht sichtbar ist, ist ebenfalls vorzugsweise eine Dichtung vorgesehen, so dass der Kurzschlusskanal 28 eine umlaufende Dichtung an seinen Innenwänden aufweist.

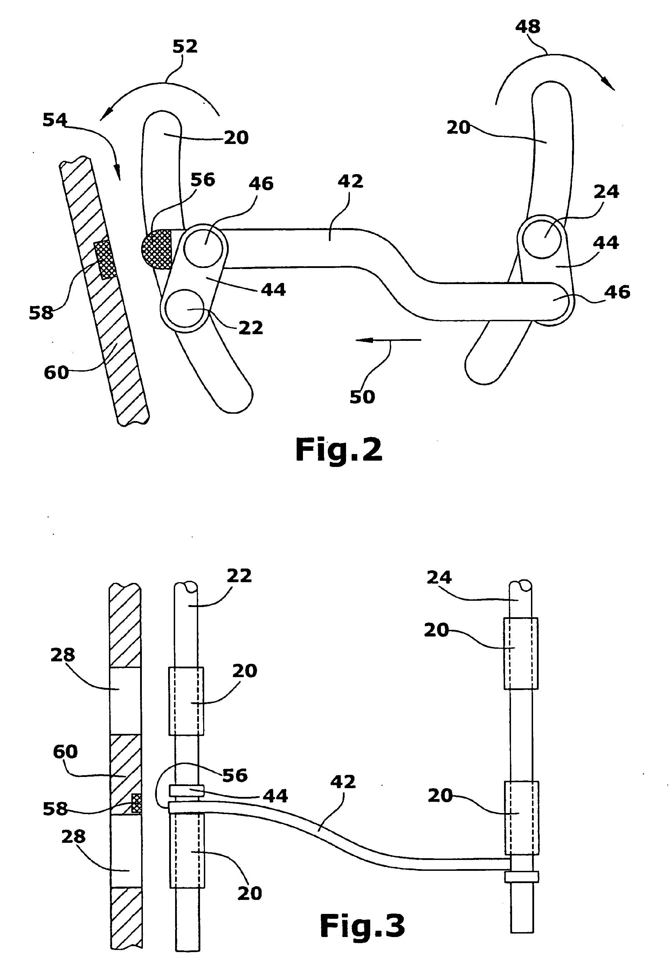

Die beiden Schaltwellen 22, 24 sind mit einem Koppelgestänge 42 (Fig. 2) verbunden. Die Verbindung der Wellen 22, 24 mit dem Koppelgestänge 42 erfolgt über Zwischenelemente 44 und stiftförmige Halterungen 46, so dass der Angriffspunkt des Koppelgestänge 42 versetzt zu der Welle 22 bzw. 24 ist. Durch ein Drehen der Welle 24, die beispielsweise mit einer nicht dargestellten Betätigungseinrichtung, wie einem Elektromotor verbunden ist, in Richtung eines Pfeils 48, wird das Koppelgestänge 42 in Richtung des Pfeils 50 verschoben. Hierdurch erfolgt ein Schwenken der gegenüberliegenden Schaltklappen 20 in Richtung eines Pfeils 52.

Bei der bevorzugten, in den Fign. 2 und 3 dargestellten Ausführungsform weist die Arretierungseinrichtung 54 zwei Arretierungselemente 56, 58 auf. Bei den Arretierungselementen 56, 58 handelt es sich beispielsweise um zwei Magnete oder einen Magnet und ein Metallteil. Das erste Arretierungselement 56 ist im dargestellten Ausführungsbeispiel an einem Ende des Koppelgestänges 42 vorgesehen bzw. mit diesem verbunden. Das zweite Arretierungselement 58 ist in einer Wand 60 des Gehäuses 40 angeordnet. Durch Drehen der Welle 24 erfolgt ein Verschieben des Gestänges 42 in Richtung des Pfeils 50. Hierdurch verringert sich der Abstand zwischen den beiden Arretierungselementen, so dass die magnetische Anziehungskraft zwischen den beiden Arretierungselementen 56, 58 größer wird. Dies bewirkt ein Halten der beiden Schaltklappen 20 in der Offenstellung, d.h. in der in Fig. 1 mit 20' bezeichneten Stellung.

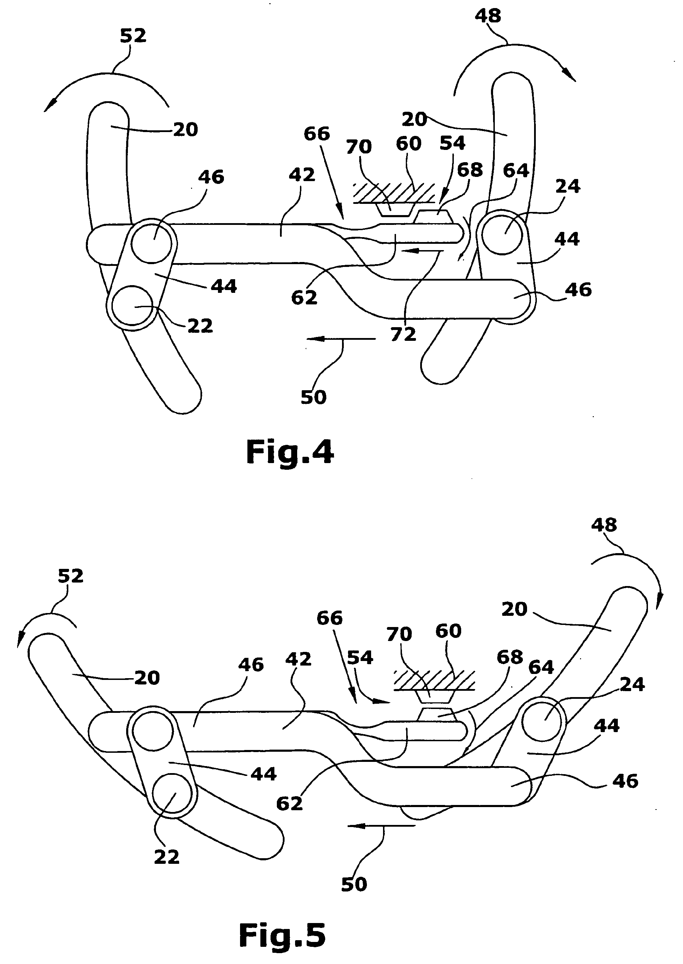

Bei einer weiteren bevorzugten Ausführungsform der Erfindung (Fign. 4-6) sind die gleichen und ähnliche Elemente mit denselben Bezugszeichen bezeichnet.

Bei der dargestellten schematischen Schaltklappenanordnung handelt es sich ebenfalls um ein Ausführungsbeispiel einer Schaltklappenanordnung, die insbesondere für einen V-Motor und somit beispielsweise in einem Luftansaugkanalsystem 10 (wie in Fig. 1 dargestellt) vorgesehen sein kann.

Statt dem Vorsehen eines Arretierungselementes 56 am Ende einer Koppelstange bzw. eines Koppelgestänges 42 ist in der dargestellten Ausführungsform das Koppelgestänge 42 mit einem Halteelement 62 verbunden. Das Halteelement 62 ist vorzugsweise aus Kunststoff hergestellt und weist, um ein elastisches Auslenken in Richtung eines Pfeils 64 zu ermöglichen, eine Verjüngung 66 auf. Das stabförmige Halteelement 62 trägt als erstes Arretierungselement 68 einen Magneten. Bei dem zweiten Arretierungselement 70 handelt es sich ebenfalls um einen Magneten, der ortsfest ist. Insbesondere ist der Magnet 70 an dem Saugrohrgehäuse 60 befestigt.

Beim Betätigen der Schaltklappen 20,22 wird eine der beiden Schaltwellen 22,24 über eine nicht dargestellte Betätigungseinrichtung gedreht. Da die beiden Schaltwellen 22,24 über ein Koppelgestänge 42,44 miteinander verbunden sind, wird die nicht mit der Betätigungseinrichtung verbundene Schaltwelle mitgedreht. Hierbei wird die Koppelstange 42 in Richtung des Pfeils 50 verschoben.

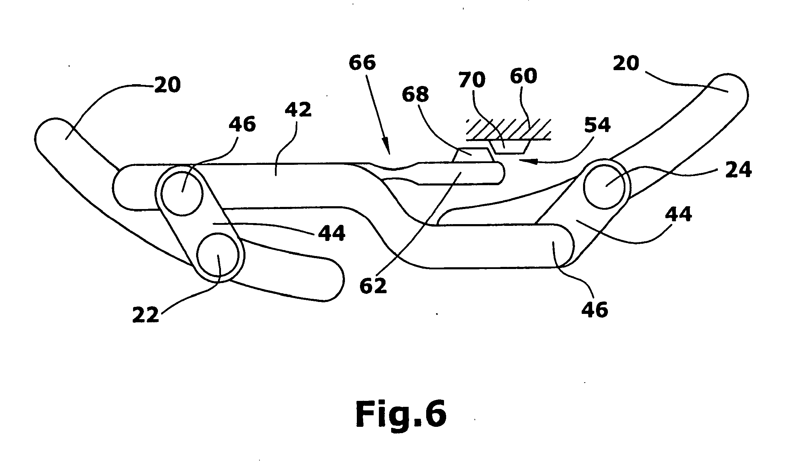

Da das Halteelement 62 fest mit der Koppelstange 42 verbunden ist, bewegt sich das Halteelement 62 in Richtung des Pfeils 72, so dass sich das erste Arretierungselement 68 ebenfalls in Richtung des Pfeils 72 bewegt. Ohne das zweite Arretierungselement 70 würde sich das erste Arretierungselement entlang einer Geraden bewegen. Durch das zweite Arretierungselement 70 erfolgt jedoch ein Auslenken in die in Fig. 5 dargestellte Stellung. Das Auslenken erfolgt, da die beiden Magnete 68,70 derart angeordnet sind, dass sie sich gegenseitig abstoßen. Bei einer anschließenden weiteren Bewegung der Koppelstange 42 und somit auch des Halteelements 62 in Richtung des Pfeils 50 wird das erste Arretierungselement 68 auf die andere Seite des zweiten Arretierungselements 70 bewegt. Auf Grund der Elastizität des Halteelements 62 bewegt sich dieses wieder in Fig. 5 nach oben, so dass es in die in Fig. 6 dargestellte Stellung gelangt.

Das erste Betätigungselement 68 ist somit in einer ersten Endstellung, beispielsweise bei geschlossenen Klappen, auf einer Seite des zweiten Betätigungselements 70 (Fig. 4) angeordnet. Sobald das erste Betätigungselement 68 bewegt wurde und in eine zweite Endstellung, beispielsweise bei geöffneten Schaltklappen (Fig. 6), bewegt wird, ist das erste Arretierungselement 68 in Bewegungsrichtung auf der gegenüber liegenden Seite des zweiten Arretierungselements 70 angeordnet. In beiden Endstellungen ist eine sehr gute Arretierung der Klappen 20 gewährleistet, da die Magnetkräfte die Schaltklappen 20 nicht in ihrer Stellung halten, sondern gegebenenfalls gegen entsprechend vorgesehene Anschläge drücken.

## Patentansprüche

1. Schaltklappenanordnung für Luftansaugkanäle, insbesondere von Brennkraft-V-Motoren zur Längenveränderung der Luftansaugkanäle, mit
mindestens zwei Schaltklappen (20) und
zwei zur Lagerung der Schaltklappen (20) dienenden Schaltwellen (22, 24), **gekennzeichnet durch**
eine die Schaltwellen (22, 24) verbindende Koppelstange (42) und
eine mit der Koppelstange (42) verbundene Betätigungseinrichtung zum gemeinsamen Schalten der Schaltklappen (20),
wobei die Koppelstange (42) eine Arretierungseinrichtung (54) zum Halten der Schaltklappen (20) in einer Endstellung (20') aufweist, wobei
die Arretierungseinrichtung (54) derart ausgebildet ist, dass die Arretierung durch Magnetkräfte erfolgt.

2. Schaltklappenanordnung nach Anspruch 1, **dadurch gekennzeichnet, dass** die Schaltklappen (20) und/ oder die Schaltwellen (22, 24) mittelbar oder unmittelbar mit einem ersten Arretierungselement (56,68) verbunden sind, das mit einem zweiten, insbesondere am Saugrohrgehäuse (60) angeordneten Arretierungselement (58,70) zusammenwirkt.

3. Schaltklappenanordnung nach Anspruch 2, **dadurch gekennzeichnet, dass** eines der beiden Arretierungselemente (56,58;68,70) mit dem Koppelgestänge (42) verbunden ist, insbesondere an einem in Richtung des Saugrohrgehäuses (60) weisenden Ende einer Koppelstange (42) des Koppelgestänges, angeordnet ist.

4. Schaltklappenanordnung nach einem der Ansprüche 2 oder 3, **dadurch gekennzeichnet, dass** das erste Arretierungselement (68) beim Betätigen der Schaltklappen (20) einen Betätigungsweg zurückgelegt, in dem das zweite Arretierungselement (70) angeordnet ist, wobei das zweite Arretierungselement (70) das erste Arretierungselement (68) zum Erreichen der Endstellung (20') auslenkt.

5. Schaltklappenanordnung nach einem der Ansprüche 1-4, **dadurch gekennzeichnet, dass** die beiden Arretierungselemente (68,70) als Magnete ausgebildet und derart angeordnet sind, dass sie sich gegenseitig abstoßen.

6. Schaltklappenanordnung nach einem der Ansprüche 2-5, **dadurch gekennzeichnet, dass** das erste Arretierungselement (70) an einem sich beim Betätigen der Schaltklappen (20) mitbewegenden Halteelement (62) angeordnet ist.

7. Schaltklappenanordnung nach Anspruch 6, **dadurch gekennzeichnet, dass** das Halteelement (62) mit dem Koppelgestänge (42) verbunden ist.

8. Schaltklappenanordnung nach Anspruch 6 oder 7, **dadurch gekennzeichnet, dass** das Halteelement (62) elastisch auslenkbar ist.

9. Schaltklappenanordnung nach einem der Ansprüche 2-8, **dadurch gekennzeichnet, dass** das erste Arretierungselement (68) in Bewegungsrichtung (72) in einer ersten Endstellung auf einer Seite des zweiten Arretierungselements (70) und in einer zweiten Endstellung auf der gegenüber liegenden Seite des zweiten Arretierungselements (70) angeordnet ist.

10. Schaltklappenanordnung nach einem der Ansprüche 1-9, **dadurch gekennzeichnet, dass** zwischen den Arretierungselementen (56, 58) auch in der Offenstellung (20') ein Spalt vorgesehen ist.

## Claims

1. Control valve assembly for intake channels, in particular of an internal combustion V-engine, for the length adjustment of said intake channels, comprising
at least two control valves (20), and
two switching shafts (22, 24) for supporting the control valves (20), **characterized by**
a coupling rod (42) connecting the switching shafts (22, 24), and
an actuator means connected to the coupling rod (42) for switching the control valves (20) together,
the coupling rod (42) comprising a locking means (54) for retaining the control valves (20) in an end position (20'), wherein
said locking means (54) is designed such that the locking is effected by magnetic forces.

2. Control valve assembly of claim 1, **characterized in that** said control valves (20) and/or said switching shafts (22, 24) are connected indirectly or directly to a first locking element (56, 68) that cooperates with a second locking element (58, 70) arranged in particular at the intake pipe housing (60).

3. Control valve assembly of claim 2, **characterized in that** one of the two locking elements (56, 58; 68, 70) is connected to the coupling linkage (42), said locking element being arranged in particular at an end of a coupling rod (42) of said coupling linkage facing towards the intake pipe housing (60).

4. Control valve assembly of one of claims 2 or 3, **characterized in that,** upon actuation of the control valves (20), the first locking element (68) travels an actuating path in which the second locking element (70) is arranged, said second locking element (70) deflecting the first locking element (68) in order to reach the end position (20').

5. Control valve assembly of one of claims 1-4, **characterized in that** the two locking elements (68, 70) are configured as magnets and are arranged such that they repel each other.

6. Control valve assembly of one of claims 2-5, **characterized in that** said first locking element (70) is arranged at a retaining element (62) moving along when the control valves (20) are actuated.

7. Control valve assembly of claim 6, **characterized in that** said retaining element (62) is connected to said coupling linkage (42).

8. Control valve assembly of claim 6 or 7, **characterized in that** said retaining element (62) is elastically deflectable.

9. Control valve assembly of one of claims 2-8, **characterized in that,** seen in the direction of movement (72), said first locking element (68) is arranged, in a first end position, on one side of the second locking element (70) and is arranged, in a second end position, on the opposite side of the second locking element (70).

10. Control valve assembly of one of claims 1-9, **characterized in that** a gap is provided between the locking elements (56, 58) also in the open position (20').

## Revendications

1. Ensemble de volets de commande pour conduites d'admission d'air, notamment de moteurs à combustion interne en V, destiné à changer la longueur desdites conduites d'admission d'air, comprenant
au moins deux volets de commande (20) et
deux arbres de commande (22, 24) pour supporter lesdits volets de commande (20),
**caractérisé par**
une tige de couplage (24) connectant lesdits arbres de commande (22, 24) et
un moyen actionneur connecté à ladite tige de couplage (42) pour commander les volets de commande (20) ensembles,
ladite tige de couplage (42) comprenant un moyen de blocage (54) pour retenir les volets de commande (20) en une position finale (20'),
ledit moyen de blocage (54) étant configuré de sorte que le blocage est effectué par des forces magnétiques.

2. Ensemble de volets de commande selon la revendication 1, **caractérisé en ce que** lesdits volets de commande (20) et/ou lesdits arbres de commande (22, 24) sont connectés indirectement ou directement à un premier élément de blocage (56, 58) coopérant avec un deuxième élément de blocage (58, 70) disposé notamment au niveau du boitier de la conduite d'admission (60).

3. Ensemble de volets de commande selon la revendication 2, **caractérisé en ce que** l'un des deux éléments de blocage (56, 58; 68, 70) est connecté à la tringlerie de couplage (42), ledit élément étant prévu notamment à une extrémité d'une tige de couplage (42) de la tringlerie de couplage, dirigée vers le boitier de la conduite d'admission (60).

4. Ensemble de volets de commande selon la revendication 2 ou 3, **caractérisé en ce que** ledit premier élément de blocage (68) parcourt un chemin d'actionnement lors de l'actionnement des volets de commande (20), dans lequel chemin est installé ledit deuxième élément de blocage (70), ledit deuxième élément de blocage (70) faisant dévier ledit premier élément de blocage (68) afin d'arriver à la position finale (20').

5. Ensemble de volets de commande selon l'une quelconque des revendications 1 à 4, **caractérisé en ce que** les deux éléments de blocage (68, 70) sont réalisés comme des aimants et sont disposé de sorte qu'ils se repoussent.

6. Ensemble de volets de commande selon l'une quelconque des revendications 2 à 5, **caractérisé en ce que** ledit premier élément de blocage (70) est prévu au niveau d'un élément de retenue (62) se déplaçant avec les volets de commande (20) lorsque ceux-ci sont actionnés.

7. Ensemble de volets de commande selon la revendication 6, **caractérisé en ce que** ledit élément de retenue (62) est connecté à la tringlerie de couplage (42).

8. Ensemble de volets de commande selon la revendication 6 ou 7, **caractérisé en ce que** ledit élément de retenue (62) est apte à être dévié élastiquement.

9. Ensemble de volets de commande selon l'une quelconque des revendications 2 à 8, **caractérisé en ce que,** vu dans la direction de déplacement (72), ledit premier élément de blocage (70), dans une première position finale, est situé sur l'un côté dudit deuxième élément de blocage (70), et que, dans une deuxième position finale, ledit élément est situé sur le côté opposé dudit deuxième élément de blocage (70).

10. Ensemble de volets de commande selon l'une quelconque des revendications 1 à 9, **caractérisé en ce qu'**une fente existe entre les éléments de blocage (56, 58) même dans la position d'ouverture (20').
